(19) Europäisches Patentamt
European Patent Office
Office européen des brevets

(11) Numéro de publication : **0 438 367 A1**

(12) **DEMANDE DE BREVET EUROPEEN**

(21) Numéro de dépôt : 91470001.8

(22) Date de dépôt : 09.01.91

(51) Int. Cl.⁵ : **C10B 13/00, C10B 7/06, C10B 57/02, C10B 51/00**

(30) Priorité : 17.01.90 FR 9000589

(43) Date de publication de la demande :
24.07.91 Bulletin 91/30

(84) Etats contractants désignés :
AT BE DE ES GB IT LU NL SE

(71) Demandeur : INSTITUT DE RECHERCHES DE
LA SIDERURGIE FRANCAISE (IRSID)
Immeuble Elysées-la-Défense 19, Le Parvis
F-92800 Puteaux La Défence 4 (FR)

(72) Inventeur : **Errard, Jean-Claude**
**17, Chaussée d'Asie**
**F-57100 Thionville (FR)**

(74) Mandataire : **Ventavoli, Roger et al**
**TECHMETAL PROMOTION Domaine de**
**l'IRSID Voie romaine BP 321**
**F-57213 Maizières-lès-Metz Cédex (FR)**

(54) **Procédé et dispositif de fabrication de coke en continu.**

(57)    La présente invention concerne un procédé et un dispositif de fabrication de coke à partir d'un mélange (2) à base de charbon en grains, caractérisés en ce qu'on réalise la fusion et la carbonisation des grains de charbon en formant, à l'intérieur d'un espace compris entre deux surfaces chauffées en défilement se faisant face à faible distance, un pain continu (9) de matière carbonée en cours de cokéfaction que l'on extrait dudit espace, et en ce qu'on chauffe ledit pain en défilement en aval dudit espace pour provoquer sa cokéfaction complète. Préférentiellement le pain (9) est ensuite refroidi.

Les parois chauffées en défilement peuvent être constituées par les surfaces externes (5,5') de deux cylindres (6,6') en rotation en sens inverses autour de leurs axes respectifs. Le dispositif comporte également des moyens de support et d'entraînement du pain (9).

EP 0 438 367 A1

# PROCEDE ET DISPOSITIF DE FABRICATION DE COKE EN CONTINU

La présente invention concerne la fabrication du coke, destiné notamment à alimenter les installations sidérurgiques telles que les hauts fourneaux.

Le coke est habituellement fabriqué par distillation de charbon dans des fours à coke, afin d'en faire partir les matières volatiles. Le procédé de cokéfaction dans les fours conventionnels présente des défauts bien connus. Tout d'abord, les opérations de cokéfaction y sont réalisées de manière discontinue : le charbon est chargé dans des cellules à parois céramiques qui ne sont vidées que lorsque leur contenu entier est cokéfié. Comme tout procédé discontinu, il exige des manipulations fréquentes et lourdes, nuisibles à un fonctionnement régulier et économe en énergie de l'installation. Pour y remédier, il n'est guère envisageable d'automatiser davantage les opérations. De plus, ces installations n'acceptent pas n'importe quelle qualité de charbon. En effet, pour être cokéfié, le charbon doit passer lors de sa montée en température par une phase plastique. Or, la lente montée en température du charbon dans les fours à coke classiques ne permet d'obtenir cette phase plastique que pour certains types de charbons dits "cokéfiables", car les deux étapes de fusion et de cokéfaction se produisent dans le même réacteur. Leur optimisation, qui permettrait d'utiliser une plus vaste gamme de qualités de charbons, nécessiterait des conditions de transfert thermique différentes pour chaque étape.

Ces unités produisent des gaz et des poussières très polluants si on ne leur associe pas des installations de traitement des rejets très coûteuses en investissements et en maintenance. De plus, le bilan énergétique des fours à coke est médiocre pour deux raisons principales. D'une part, la progression de la chaleur est lente au travers des parois céramiques et de la couche de coke déjà formée. D'autre part l'interface réfractaire-coke n'est pas des meilleures, car les grains de charbon n'épousent qu'imparfaitement les parois des cellules qui communiquent une grande partie de leur chaleur à l'air ambiant et non directement aux grains de charbon.

Enfin, les cokeries classiques ont une inertie thermique très importante, à cause de la masse énorme de réfractaires à utiliser. Une modification rapide de leurs paramètres de fonctionnement pour faire varier la quantité de coke produite est donc difficile.

L'utilisation dans ces cokeries de mélanges préchauffés à environ 250°C permet de réduire la durée des opérations et améliore le rendement thermique. Elle pose cependant des problèmes très importants au niveau de la durée de vie des fours, du fait notamment des phénomènes de poussée que le mélange chaud induit sur les parois réfractaires.

Le but de l'invention est de produire, pour la sidérurgie ou la fonderie, des cokes ayant des propriétés comparables à celles du coke produit dans les fours conventionnels, mais dans des installations ne présentant pas les inconvénients de ces mêmes fours.

A cet effet, l'invention a pour objet un procédé de fabrication de coke à partir d'un mélange à base de charbon en grains, caractérisé en ce qu'on réalise la fusion et la carbonisation des grains de charbon en formant, à l'intérieur d'un espace compris entre deux surfaces chauffées en défilement se faisant face à faible distance et étant en contact avec le mélange, un pain continu de matière carbonée en cours de cokéfaction que l'on extrait dudit espace, et en ce qu'on chauffe ledit pain en défilement en aval dudit espace pour provoquer sa cokéfaction complète.

Préférentiellement, après sa cokéfaction, le pain est refroidi et fractionné, et sa chaleur sensible récupérée pour préchauffer le mélange avant son introduction entre les parois chauffées.

L'invention a également pour objet un dispositif pour la mise en oeuvre de ce procédé, caractérisé en ce qu'il comprend un conteneur alimenté en mélange granuleux à base de charbon, dont la sortie est constituée par deux parois chauffées en défilement se faisant face à faible distance et définissant entre elles un espace de largeur "e", permettant de former et d'extraire dudit espace un pain continu de matériau cokéfiable, et dans une première zone située immédiatement et aval dudit espace des moyens de support et d'entraînement dudit pain et des moyens de chauffage pour achever la cokéfaction dudit pain.

Dans une forme de réalisation, ces parois en défilement sont constituées par les surfaces latérales externes de deux cylindres en rotation en sens inverses autour de leurs axes respectifs.

Préférentiellement, ce dispositif comporte également des moyens de refroidissement du pain de coke dans une deuxième zone faisant suite, dans le sens de défilement du pain, à la zone où a lieu la cokéfaction, et des moyens de récupération de la chaleur sensible du pain de coke assurant un préchauffage du mélange granuleux à base de charbon.

Comme on l'aura compris, l'invention consiste à initier la cokéfaction du mélange à base de charbon au voisinage des parois chauffantes et entre celles-ci. On forme ainsi un pain d'un matériau semi-rigide, entraîné à la fois par le mouvement des parois et celui de la bande transporteuse. Sa cokéfaction complète, puis son refroidissement sont exécutés dans les parties terminales de la machine. Il est ainsi possible de dissocier la conduite thermique de la phase de fusion des grains de charbon de celle de la phase de cokéfaction finale, ce qui permet de réaliser au mieux ces deux opérations.

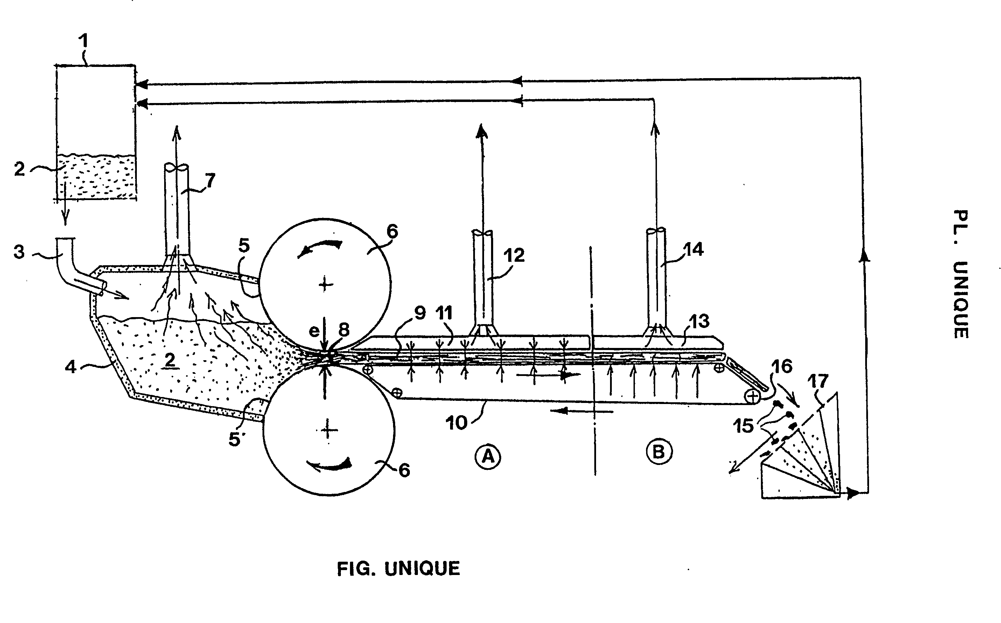

L'invention sera mieux comprise à la lecture de la desrciption qui suit, faisant référence à la figure unique annexée, schématisant en coupe longitudinale un exemple de réalisation d'une installation selon l'invention.

L'installation comporte un premier conteneur 1 renfermant un mélange à cokéfier 2 à base de grains de charbon. Ce mélange peut se déverser de façon continue ou discontinue par une conduite 3 dans un deuxième conteneur 4 fermé. Sur l'un de ses côtés, cette fermeture est réalisée grâce aux parois latérales 5, 5' de deux cylindres 6, 6', réalisés par exemple en un matériau métallique, dont les axes sont sensiblement horizontaux et situés dans le même plan vertical. Ces cylindres 6, 6', dont le diamètre peut être de l'ordre de 1,5 m, sont en rotation en sens inverses, comme indiqué par les flèches, de manière à extraire du deuxième conteneur 4 les matériaux qu'il renferme. Leur entrefer prend la valeur "e", qui est, par exemple, de l'ordre de 5 cm. Ils sont munis de moyens de chauffage internes, non représentés, de types connus en eux-mêmes tels que des inducteurs, des résistances électriques, une circulation de gaz chauds, ou tout autre moyen permettant de porter la surface externe 5, 5' des cylindres 6, 6' à une température élevée, de l'ordre de 700°C. Les surfaces externes 5, 5' des cylindres communiquent leur chaleur aux grains de charbon qui sont en contact avec elles ou se trouvent dans leur voisinage. Ces grains sont portés à des températures situées dans la gamme 350-600°C. Cette élévation de température a deux effets. D'une part, elle provoque le dégagement, à partir des grains de charbon, de matières volatiles telles que des goudrons et des phénols. Celles-ci s'échappent du conteneur 4 par une conduite 7 ménagée sur sa face supérieure et amenant ces matières volatiles jusqu'à une installation de traitement des rejets. Une partie de ces matières volatiles, notamment les goudrons, se condense dans la masse de charbon, constituant un adjuvage naturel facilitant le phénomène de cokéfaction, et réduisant la quantité de gaz rejetés à traiter. D'autre part, l'élévation de température des grains fait passer ceux-ci de l'état solide à l'état plastique, ce qui les fait s'agglomérer et rend possible l'entraînement par les cylindres de la pâte 8 ainsi formée vers l'extérieur du conteneur 4. Les grains agglomérés sous pression élevée au niveau de l'entrefer des cylindres 6, 6' sont mouillés successivement et tendent à gonfler, ce qui augmente fortement le transfert des calories à l'intérieur du charbon. La carbonisation du charbon peut ainsi progresser, et il se crée un pain 9 continu de matière carbonée enveloppé d'une croûte en cours de cokéfaction qui se contracte, ce qui permet la séparation entre le pain 9 en défilement et les cylindres 6, 6' en rotation. L'espace inter-cylindres constitue donc la zone de cokéfaction commençante de la machine.

A sa sortie de l'entrefer des cylindres, le pain est déposé sur une bande transporteuse 10 formant une boucle en défilement dans le sens indiqué par les flèches et qui contribue à l'entraînement du pain 9. Cette bande transporteuse doit pouvoir résister à des températures élevées et est constituée, de préférence, par une grille, de manière à laisser exposée à l'atmosphère du four la plus grande partie de la face inférieure du pain 9. Après sa sortie de l'entrefer des cylindres, le pain 9 reposant sur la bande transporteuse 10 traverse une première enceinte dont seule la paroi supérieure 11 est représentée. Dans cette enceinte sont insufflées, par des moyens non représentés, des fumées chaudes issues de brûleurs et dirigées sur toutes les faces du produit. Leur rôle est d'achever la cokéfaction du pain en portant son coeur à une température de l'ordre de 800 à 950°C. La longueur de cette première enceinte, constituant la zone de cokéfaction finissante Ⓐ, est calculée de telle manière que la cokéfaction du pain 9 puisse être obtenue lorsque celui-ci défile à la plus grande vitesse prévue lors de la conception de la machine, compte tenu de la température et du débit des fumées disponibles. La paroi supérieure 11 de la première enceinte est munie d'une conduite d'échappement 12 par laquelle les gaz chauds ayant contribué à la cokéfaction et les produits gazeux résultant de cette opération sont évacués vers l'installation de traitement des rejets dont il a déjà été question. Un avantage de ce dispositif par rapport aux fours à coke classiques est que les gaz qui se dégagent majoritairement dans le deuxième conteneur 4 ne sont pas les mêmes que ceux qui se circulent majoritairement dans la zone Ⓐ. Il est ainsi possible de faire subir un traitement différencié et bien adapté à ces différents rejets. Il n'est pas préalablement nécessaire de faire appel à des méthodes de séparation aussi lourdes que celles qui doivent être mises en jeu lors du traitement des rejets des fours à coke classiques.

A leur sortie de cette première enceinte, le pain 9 et la bande transporteuse 10 pénètrent dans une deuxième enceinte, de conception similaire à la première et constituant la zone de refroidissement du coke Ⓑ dont seule la paroi supérieure 13 est représentée. Dans cette enceinte, on insuffle sur le pain 9 des gaz froids et secs qui permettent au pain de se refroidir. Les gaz réchauffés sont recueillis dans une conduite d'échappement 14 piquée sur la face supérieure 13 de l'enceinte, et conduits vers le premier conteneur 1 afin de réaliser un préchauffage du mélange 2 avant son introduction dans le deuxième conteneur 4. La chaleur sensible du pain de coke 9 est ainsi récupérée utilement, ce qui améliore le rendement thermique global de l'installation. Ce refroidissement permet également d'initier, voire de réaliser complétement le fractionnement du pain de coke.

A leur sortie de l'enceinte de refroidissement, les trajectoires de la bande transporteuse 10 et du pain de coke 9 s'infléchissent vers le bas et le fractionnement du pain de coke 9 en morceaux 15 de dimensions de l'ordre de 20 à 60 mm est éventuellement achevé par des moyens non représentés. Ce fractionnement forcé peut également avoir lieu dans l'enceinte de refroidissement. Les morceaux 15 tombent en chute libre le long de la bande transporteuse 10, et la quittent au point 16 où celle-ci modifie sa trajectoire pour se diriger vers l'amont de l'installation. Dans leur chute, les morceaux de coke 15 tombent sur un crible 17 dont les mailles sont conçues pour refuser les morceaux dont la taille correspond à celle des morceaux de coke classiquement utilisés. Les fines particules et les morceaux de faible diamètre qui ont traversé le crible sont collectés et renvoyés pour être remélangés au charbon destiné à être cokéfié.

Les morceaux de coke refusés poursuivent leur chute et sont récupérés, prêts à l'emploi.

Une telle installation peut avoir une productivité très supérieure à celle d'une cellule de four à coke classique qui est de l'ordre de 1,5 t/heure. Par exemple, pour une vitesse d'extraction de 1 m/min, des rouleaux de 4 m de large avec un entrefer e de 5 cm, la production d'une telle installation est de 9 t/heure. La production horaire de l'installation peut être réglée de manière très simple en jouant sur la vitesse de rotation des cylindres et la vitesse de défilement de la bande transporteuse, sur l'entrefer "e" des cylindres, et sur leur température.

Des aménagements à l'installation décrite et représentée pourraient être effectués. Par exemple il serait possible de capoter les cylindres 6, 6' sur leur portion qui ne contribue pas à la fermeture du deuxième conteneur 4 et est en contact avec l'extérieur, afin de minimiser leurs pertes thermiques. On peut également prévoir à l'intérieur du deuxième conteneur 4 des moyens pour repousser les grains de charbon 2 en direction des cylindres 6, 6' afin de faciliter leur alimentation. De même, les deux conteneurs 1 et 4 peuvent être réunis en un seul.

Les cylindres eux-mêmes peuvent être remplacés par des bandes métalliques chauffées en défilement, définissant entre elles un espace de largeur fixe ou variable, constituant la zone de cokéfaction commençante, analogue à l'espace inter-cylindres de la configuration représentée. Sa largeur minimale "e" est du même ordre de grandeur que l'entrefer des cylindres précédemment décrit.

De même, dans la zone Ⓐ de cokéfaction finissante, l'élévation de température du pain 9 peut être réalisée non par contact direct avec des gaz chauds issus de brûleurs, mais par rayonnement et convection à partir des parois de la première enceinte. Les parois sont alors elles-mêmes chauffées, par exemple grâce à une circulation de gaz chauds ne pénétrant pas à l'intérieur de l'enceinte. De cette façon, on évite tout contact entre les gaz de chauffage pouvant contenir un excès d'oxygène, et les gaz se dégageant du pain 9 lors de la cokéfaction finissante. La séparation entre les différentes espèces gazeuses mise en jeu par l'opération est donc encore améliorée.

Un autre aménagement possible serait l'installation dans la zone Ⓐ de moyens permettant d'exercer un effort de compression sur le pain, ce qui favoriserait sa cokéfaction complète. De tels moyens pourraient être constitués par une deuxième bande transporteuse, défilant à la même vitesse que la première et parallèlement à elle. Leur écartement peut être réglable en fonction de l'épaisseur initiale du pain à sa sortie des cylindres et de l'effort de compression qu'on désirerait lui appliquer compte tenu de la contraction du coke.

Bien entendu, l'invention n'est pas limitée à l'exemple décrit et représenté. D'autres configurations pour une telle installation de production de coke en continu sont possibles. En particulier, il est envisageable de réaliser une machine dont les axes des cylindres seraient situés dans un même plan horizontal. Le pain de coke serait ainsi produit verticalement et devrait vraisemblablement être soutenu sur au moins deux de ses faces, voire comprimé comme on vient de le décrire avant qu'il ne soit complètement rigidifié. L'alimentation des cylindres en grains de charbon aurait lieu par simple gravité avec une bonne efficacité. Diverses combinaisons entre les différentes variantes qui viennent d'être citées sont également imaginables.

## Revendications

1. Procédé de fabrication de coke à partir d'un mélange à base de charbon en grains, caractérisé en ce que on réalise la fusion et la carbonisation des grains de charbon en formant, à l'intérieur d'un espace compris entre deux surfaces chauffées en défilement se faisant face à faible distance et étant en contact avec ledit mélange, un pain continu de matière carbonée en cours de cokéfaction que l'on extrait dudit espace, et en ce qu'on chauffe ledit pain en défilement en aval dudit espace pour provoquer sa cokéfaction complète.

2. Procédé selon la revendication 1, caractérisé en ce que après sa cokéfaction, on refroidit le pain de manière à initier son fractionnement.

3. Procédé selon la revendication 2, caractérisé en ce que au cours du refroidissement du pain on récupère sa chaleur sensible pour préchauffer le mélange avant son introduction entre les cylindres.

4. Dispositif pour la mise en oeuvre du procédé selon la revendication 1, caractérisé en ce qu'il comprend un conteneur (4) alimenté en mélange granuleux (2) à base de charbon, dont la sortie est constituée par deux parois chauffées en défilement se faisant face à faible distance et définissant entre elles un espace de largeur minimale "e", permettant de former et d'extraire dudit espace un pain continu (9) de matériau cokéfiable, et dans une première zone (A) située immédiatement en aval dudit espace, des moyens de support et d'entraînement dudit pain et des moyens de chauffage pour achever la cokéfaction dudit pain.

5. Dispositif selon la revendication 4, caractérisé en ce que lesdites surfaces chauffées en défilement sont constituées par les surfaces latérales externes (5,5') de deux cylindres (6,6') en rotation en sens inverses autour de leurs axes respectifs.

6. Dispositif selon la revendication 4, caractérisé en ce qu'il comporte également dans ladite première zone (A) des moyens pour comprimer le pain continu (9) pendant l'achèvement de sa cokéfaction.

7. Dispositif selon la revendication 6, caractérisé en ce que lesdits moyens pour comprimer le pain (9) pendant l'achèvement de sa cokéfaction sont constitués par un ensemble de deux bandes transporteuses parallèles et défilant à la même vitesse, l'écart entre lesdites bandes étant réglable.

8. Dispositif selon l'une des revendications 4 à 7, caractérisé en ce qu'il comporte également des moyens de refroidissement du pain de coke dans une deuxième zone (B) faisant suite, dans le sens de défilement du pain, à la première zone (A) où a lieu la cokéfaction.

9. Dispositif selon la revendication 8, caractérisé en ce qu'il comporte dans ladite deuxième zone (B) des moyens de récupération de la chaleur sensible du pain de coke assurant un préchauffage du mélange granuleux à base de charbon.

PL. UNIQUE

FIG. UNIQUE

Office européen
des brevets

**RAPPORT DE RECHERCHE EUROPEENNE**

Numero de la demande

EP 91 47 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-C- 378 531 (HUTH & RÖTTGER) <br> * Revendications 1,2; figures 1,2 * <br> --- | 1,2,4,6,8 | C 10 B 13/00 <br> C 10 B 7/06 <br> C 10 B 57/02 <br> C 10 B 51/00 |
| X | DE-A-2 436 290 (OELKERS) <br> * Revendication 1; figure * <br> --- | 1,4,6,7 | |
| A | GB-A- 783 179 (MINISTER OF FUEL AND POWER) <br> * Revendications 1,4,5-11; figure * <br> --- | 1-4 | |
| A | DE-B-1 145 140 (KURT BAUM) <br> * Revendications 1,2; figure * <br> ----- | 1-3,9 | |

**DOMAINES TECHNIQUES RECHERCHES (Int. Cl5)**

C 10 B
C 10 L

Le présent rapport a été établi pour toutes les revendications

| Lieu de la recherche | Date d'achèvement de la recherche | Examinateur |
|---|---|---|
| LA HAYE | 08-04-1991 | MEERTENS J. |

EPO FORM 1503 03.82 (P0402)